# EUROPÄISCHE PATENTANMELDUNG

(11) **EP 4 181 282 A1**
(43) Veröffentlichungstag der Anmeldung: **17.05.2023**
(21) Anmeldenummer: 22020431.7
(22) Anmeldetag: 08.09.2022
(51) Int. Cl.: H01M 50/204, H01M 50/271, H01M 50/233

(54) **BATTERIEMODULGEHÄUSE ZUR AUFNAHME ZUMINDEST EINES ZELLSTACKS FÜR DEN EINSATZ IN EINEM KRAFTFAHRZEUG**

(30) Priorität: 11.11.2021 DE 102021129316
(71) Anmelder: Dr. Ing. h.c. F. Porsche Aktiengesellschaft, 70435 Stuttgart (DE)
(72) Erfinder: Kellner, Philipp, 71272 Renningen (DE); Volkmer, Christopher, 75223 Niefern-Öschelbronn (DE)

(57) **Zusammenfassung**

Batteriemodulgehäuse (2) zur Aufnahme zumindest eines Zellstacks (4) für den Einsatz in einem Kraftfahrzeug (80), umfassend eine Mehrzahl von Gehäuseeinheiten (6) zur Aufnahme von Batteriezellen (8), ein vorderes und ein hinteres Abdeckelement (10a, 10b) zum Verschließen der Gehäuseeinheiten (6), wobei die Gehäuseeinheiten (6) als Extrusionsprofile ausgebildet sind und eine vordere und eine hintere stirnseitig angeordnete Öffnung (12a, 12b) zur Einführung der Batteriezellen (8) und eine zwischen den Öffnungen (12a, 12b) angeordnete Gehäusewandung (14) aufweisen, wobei die Gehäuseeinheiten (6) über ihre Gehäusewandung (14) stoffschlüssig miteinander verbunden sind und das vordere und hintere Abdeckelement (10a, 10b) zum Abdecken der vorderen und hinteren stirnseitig angeordneten Öffnungen (12a, 12b) der Gehäuseeinheiten (6) ausgebildet sind.

## Beschreibung

Die vorliegende Erfindung betrifft ein Batteriemodulgehäuse, ein Batteriesystem, umfassend ein Batteriemodulgehäuse sowie ein Kraftfahrzeug mit einem derartigen Batteriemodulgehäuse, insbesondere mit einem derartigen Batteriesystem.

Zur Aufnahme von Zellstacks für den Einsatz in zumindest teilweise elektrisch betriebenen Kraftfahrzeugen ist die Verwendung von Batteriemodulgehäusen bekannt. In den Batteriemodulgehäusen können die Batteriezellen der Zellstacks aufgenommen und miteinander verschaltet werden. Die Außenabmessungen der Batteriemodulgehäuse entsprechen hierbei ungefähr den Abmessungen der Zellstacks. Aus vielerlei Gründen, insbesondere herstellungstechnischer und kostentechnischer Art, hat sich heute die Herstellung von Batteriemodulgehäusen über Extrusionsverfahren etabliert.

Nachteiliger Weise sind die maximalen Gehäusegrößen bei einer Herstellung von Batteriemodulgehäusen über Extrusionsverfahren aufgrund der mangelnden Verfügbarkeit zur Herstellung notwendiger großer Pressen begrenzt. Zudem müssen die Wandstärken bei größeren Profilen herstellungstechnisch dicker sein, was wiederum zu einem hohen Gewicht der Batteriemodulgehäuse führt und den Einsatz größerer Batteriemodulgehäuse nachteilig macht.

Es ist daher die Aufgabe der vorliegenden Erfindung, die voranstehend beschriebenen Nachteile zumindest teilweise zu beheben, insbesondere ist es die Aufgabe der vorliegenden Erfindung, ein Batteriemodulgehäuse zur Aufnahme zumindest eines Zellstacks für den Einsatz in einem Kraftfahrzeug zur Verfügung zu stellen, das trotz einer einfachen und kostengünstigen Herstellung eine große Gehäusegröße und ein vergleichsweise geringes Gewicht aufweist und gleichzeitig eine kompakte Anordnung zumindest eines Zellstacks ermöglicht.

Die voranstehende Aufgabe wird gelöst durch ein Batteriemodulgehäuse mit den Merkmalen des Anspruchs 1, ein Batteriesystem gemäß Anspruch 9 sowie ein Kraftfahrzeug gemäß Anspruch 11. Weitere Merkmale und Details der Erfindung ergeben sich aus den Unteransprüchen, der Beschreibung und den Zeichnungen. Technische Merkmale, die zu dem erfindungsgemäßen Batteriemodulgehäuse offenbart werden, gelten dabei auch in Verbindung mit dem erfindungsgemäßen Batteriesystem sowie dem erfindungsgemäßen Kraftfahrzeug und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Erfindungsgemäß ist ein Batteriemodulgehäuse zur Aufnahme zumindest eines Zellstacks für den Einsatz in einem Kraftfahrzeug vorgesehen. Hierbei umfasst das erfindungsgemäße Batteriemodulgehäuse eine Mehrzahl von Gehäuseeinheiten zur Aufnahme von Batteriezellen, ein vorderes und ein hinteres Abdeckelement zum Verschließen der Gehäuseeinheiten, wobei die Gehäuseeinheiten als Extrusionsprofile ausgebildet sind und eine vordere und eine hintere stirnseitig angeordnete Öffnung zur Einführung der Batteriezellen und eine zwischen den Öffnungen angeordnete Gehäusewandung aufweisen. Erfindungsgemäß ist dabei vorgesehen, dass die Gehäuseeinheiten über ihre Gehäusewandung stoffschlüssig miteinander verbunden sind und das vordere und hintere Abdeckelement zum Abdecken der vorderen und hinteren stirnseitig angeordneten Öffnungen der Gehäuseeinheiten ausgebildet sind.

Im Gegensatz zu den bekannten über Extrusionsverfahren hergestellten Batteriemodulgehäusen für den Einsatz in einem Kraftfahrzeug, ist das erfindungsgemäße Batteriemodulgehäuse durch die mehrteilige Ausbildung aus einer Mehrzahl von Gehäuseeinheiten auch in großen Abmessungen herstellbar, sodass selbst große Zellstacks bzw. eine Mehrzahl einzelner Zellstacks aufnehmbar und somit eine große Anzahl von Batteriezellen kompakt innerhalb des Batteriemodulgehäuses anordbar und flexibel verschaltbar sind. Durch die erfindungsgemäß vorgesehene stoffschlüssige Verbindung zwischen den einzelnen Gehäuseeinheiten ist zudem eine besonders stabile Ausführung eines Batteriemodulgehäuses herstellbar. Die Möglichkeit der Verbindung der einzelnen Gehäuseeinheiten erlaubt zudem eine einfache und kostengünstige Herstellung sowie eine gewichtsoptimierte Ausführung eines Batteriemodulgehäuses für den Einsatz in einem Kraftfahrzeug.

Das gegenständliche Batteriemodulgehäuse für den Einsatz in einem Kraftfahrzeug kann vorzugsweise in einem zumindest teilweise elektrisch betriebenen PKW oder einem LKW zum Einsatz kommen. Gegenständlich ist vorzugsweise vorgesehen, dass das Batteriemodulgehäuse zumindest zwei Gehäuseeinheiten aufweist, die stoffschlüssig miteinander verbunden sind. Die stoffschlüssige Verbindung kann hierbei unmittelbar oder mittelbar ausgebildet sein. Des Weiteren können vorzugsweise entsprechend auch genau zwei Abdeckelemente zum Verschließen der Gehäuseeinheiten vorgesehen sein, die zumindest die vordere und hintere stirnseitig angeordnete Öffnung der beiden miteinander verbundenen Gehäuseeinheiten abdecken. Die Gehäusewandung einer Gehäuseeinheit kann ferner vorzugsweise - längsseitig entlang der Extrusionrichtung angeordnete - Boden- und Deckflächen aufweisen, die über die senkrecht dazu angeordneten Seitenwände miteinander verbunden sind. Die Gehäuseeinheiten sind hierbei zudem vorzugsweise derart miteinander verbunden, dass die jeweils aneinander angrenzenden Gehäusewandungen der Gehäuseeinheiten miteinander stoffschlüssig verbunden sind. Unter einem Zellstack kann gegenständlich insbesondere eine Einheit aus miteinander verschalteten Batteriezellen verstanden werden. Unter einer Gehäuseeinheit kann erfindungsgemäß vorzugsweise eine eigenständig abtrennbare Einheit zur Ausbildung eines Gehäuses bzw. zur Ausbildung eines Batteriemodulgehäuses verstanden werden, wobei die Gehäuseeinheit insbesondere monolithisch ausgebildet sein kann. Unter einem Abdeckelement kann im Rahmen der Erfindung insbesondere ein Element verstanden werden, das zum Abdecken der Öffnungen der Gehäuseeinheiten bzw. zum Verschließen der Gehäuseeinheiten ausgebildet ist. Unter einem Extrusionsprofil kann erfindungsgemäß ferner ein Profil verstanden werden, das durch ein Extrusionsverfahren hergestellt wird. Unter einer Gehäusewandung kann schließlich insbesondere die vollständige Umrahmung, umfassend Seitenwände, Bodenflächen und Deckflächen einer Gehäuseeinheit verstanden werden.

Im Rahmen einer möglichst kompakten Anordnung von Batteriezellen unter gleichzeitiger Gewährleistung einer flexiblen Zellverschaltung kann es insbesondere von Vorteil sein, wenn zumindest zwei Gehäuseeinheiten zur Aufnahme von Batteriezellen vorgesehen sind, wobei die Gehäuseeinheiten vorzugsweise über entlang einer Extrusionrichtung angeordnete Seitenwände der jeweiligen Gehäusewandung stoffschlüssig miteinander verbunden sind, wobei jede Gehäuseeinheit insbesondere eine Trennwand aufweist, die die Gehäuseeinheit in zwei Kammern trennt. Durch die Anordnung von zwei Gehäuseeinheiten, die stoffschlüssig miteinander verbunden sind, kann ein Batteriemodulgehäuse insbesondere größer ausgestaltet werden, sodass größere Zellstacks oder mehrere Zellstacks mit mehr Batteriezellen angeordnet werden können, die dann auf einer größeren Fläche flexibel miteinander verschaltet werden können.

Ferner kann im Rahmen einer kompakten Anordnung von Batteriezellen unter gleichzeitiger Berücksichtigung einer Minimierung einer Brandgefahr vorteilhafterweise vorgesehen sein, dass zwischen zwei stoffschlüssig miteinander verbunden Gehäuseeinheiten innerhalb eines Fügebereiches eine Zwischenkammer zur Aufnahme von Luft und/oder einer Brandschutzschicht vorgesehen ist, wobei die aneinander angrenzenden Seitenwände der beiden Gehäuseeinheiten vorzugsweise unmittelbar über eine Schweißverbindung miteinander verbunden sind. Eine Kammer zur Aufnahme von Luft und/oder einer Brandschutzschicht kann hierbei vorzugsweise entsprechend schmal, bspw. in Form eines toleranzbedingten Spaltes ausgebildet sein.

Zudem kann es von Vorteil sein, wenn zwischen zwei stoffschlüssig miteinander verbunden Gehäuseeinheiten innerhalb eines Fügebereiches eine Zwischenkammer zur Aufnahme von Batteriezellen vorgesehen ist, wobei die aneinander angrenzenden Seitenwände der beiden Gehäuseeinheiten vorzugsweise mittelbar durch zusätzliche Verbindungselemente stoffschlüssig miteinander verbunden sind. Eine derartige Anordnung gewährleistet nicht nur eine besonders kompakte Anordnung von Batteriezellen, sondern gewährleistet zudem eine flexible Zellverschaltung. Eine Kammer zur Aufnahme von Batteriezellen kann hierbei vorzugsweise entsprechend groß ausgebildet sein, um genügend Platz zur Aufnahme der Zellen zu bieten.

Zudem kann es insbesondere von Vorteil sein, wenn die zusätzlichen Verbindungselemente stoffschlüssig mit einer ersten und einer zweiten Gehäuseeinheit verbunden sind, wobei die zusätzlichen Verbindungselemente vorzugsweise über eine erste Seite stoffschlüssig mit einer ersten Gehäuseeinheit und über eine zweite Seite stoffschlüssig mit einer zweiten Gehäuseeinheit verbunden sind, wobei die zusätzlichen Verbindungselemente insbesondere in Form von Blechen ausgebildet sind. Eine solche Ausführung eines Batteriemodulgehäuses ermöglicht insbesondere eine konstruktiv einfache und schnelle Verbindung von zwei Gehäuseeinheiten über derartige zusätzliche Verbindungselemente.

Ebenso kann es von Vorteil sein, wenn die stoffschlüssig miteinander verbundenen Gehäuseeinheiten sowohl mechanisch, als auch mediendicht miteinander verbunden sind, wobei die stoffschlüssigen Verbindungsstellen, vorzugsweise an den Boden- und Deckflächen der Gehäuseeinheiten zwischen zwei Gehäuseeinheiten angeordnet sind. Durch eine mediendichte Verbindung kann insbesondere ein Eintritt von Luft und/oder Wasser in das Batteriemodulgehäuse verhindert werden, was die Gefahr eines Kurzschlusses bzw. eines Batteriebrandes erheblich senkt.

Im Rahmen einer konstruktiv einfachen und kostengünstigen Art und Weise der Einführung einer stoffschlüssigen Verbindung zwischen zwei Gehäuseeinheiten kann gegenständlich vorteilhafterweise vorgesehen sein, dass die stoffschlüssige Verbindung in Form einer Klebeverbindung oder einer Schweißverbindung, insbesondere einer Rührreibschweißverbindung oder einer Laserschweißverbindung ausgebildet ist. Mit Hilfe einer Rührreibschweißverbindung oder einer Laserschweißverbindung ist es insbesondere möglich auf schnelle und gezielte Weise zwei Gehäuseeinheiten entlang ihrer Seitenflächen miteinander zu verbinden.

Im Hinblick auf eine gleichzeitig stabile und gewichtsoptimierte Ausführung eines gegenständlichen Batteriemodulgehäuses ist es vorteilhafterweise ebenfalls denkbar, dass die Gehäuseeinheiten aus einem Aluminiumwerkstoff und/oder einem Magnesiumwerkstoff und/oder einem faserverstärkten Kunststoff ausgebildet sind.

Ebenfalls Gegenstand der Erfindung ist ferner ein Batteriesystem für den Einsatz in einem Kraftfahrzeug, umfassend ein voranstehend beschriebenes Batteriemodulgehäuse und eine Mehrzahl von innerhalb des Batteriemodulgehäuses angeordneten Zellstacks, bspw. zumindest drei oder vier Zellstacks zum Antreiben des Kraftfahrzeugs. Damit weist das erfindungsgemäße Batteriesystem dieselben Vorteile auf, wie sie bereits ausführlich in Bezug auf das erfindungsgemäße Batteriemodulgehäuse beschrieben worden sind. Zudem kann gegenständlich eine Einheit aus mehreren Batteriesystemen, bspw. drei oder vier Batteriesystemen vorgesehen sein, die stoffschlüssig miteinander verbunden sind.

Im Rahmen einer möglichst kompakten Anordnung von Batteriezellen unter Gewährleistung einer flexiblen Zellverschaltung kann erfindungsgemäß ferner vorgesehen sein, dass zumindest drei Zellstacks vorgesehen sind, wobei vorzugsweise ein erstes Zellstack innerhalb einer ersten Gehäuseeinheit, ein zweites Zellstack innerhalb einer mit der ersten Gehäuseeinheit stoffschlüssig verbundenen zweiten Gehäuseeinheit und ein drittes Zellstack zwischen der ersten und zweiten Gehäuseeinheit in einer Zwischenkammer angeordnet ist. Hierbei können bei der gegenständlich vorgesehenen Anordnung von drei Zellstacks bspw. zwei Batteriemodulgehäuse über zusätzliche Verbindungselemente stoffschlüssig miteinander verbunden sein, sodass zwischen dem ersten und dem zweiten Batteriemodulgehäuse eine Zwischenkammer zur Anordnung eines weiteren Zellstacks angeordnet ist.

Ebenfalls Gegenstand der Erfindung ist ferner ein Kraftfahrzeug, umfassend ein voranstehend beschriebenes Batteriemodulgehäuse, insbesondere umfassend ein voranstehend beschriebenes Batteriesystem. Damit weist das erfindungsgemäße Kraftfahrzeug dieselben Vorteile auf, wie sie bereits ausführlich in Bezug auf das erfindungsgemäße Batteriemodulgehäuse und das erfindungsgemäße Batteriesystem beschrieben worden sind. Das Kraftfahrzeug kann hierbei vorzugsweise in Form eines zumindest teilweise elektrisch betriebenen Kraftfahrzeugs, vorzugsweise in Form eines Hybridfahrzeugs oder eines Elektrofahrzeugs ausgebildet sein. Vorzugsweise kann ein gegenständliches Batteriemodulgehäuse bzw. ein gegenständliches Batteriesystem dabei zwischen zwei Seitenschwellern in Querrichtung innerhalb eines Kraftfahrzeugs angeordnet sein. Hierbei kann das Batteriemodulgehäuse insbesondere direkt, ohne zusätzlichen Batteriekasten oder dergleichen mit der Karosserie des Kraftfahrzeugs verbunden, bspw. verschraubt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen schematisch:
- Figur 1: ein erfindungsgemäßes Batteriemodulgehäuse zur Aufnahme zumindest eines Zellstacks für den Einsatz in einem Kraftfahrzeug gemäß einem ersten Ausführungsbeispiel in einer Draufsicht,
- Figur 2: ein erfindungsgemäßes Batteriemodulgehäuse zur Aufnahme zumindest eines Zellstacks für den Einsatz in einem Kraftfahrzeug gemäß einem ersten Ausführungsbeispiel in einer Draufsicht ohne Anordnung eines vorderen Abdeckelementes,
- Figur 3: ein erfindungsgemäßes Batteriesystem für den Einsatz in einem Kraftfahrzeug gemäß einem ersten Ausführungsbeispiel in einer Querschnittsansicht gemäß einem Querschnitt entlang der Schnittachse I-I gemäß Figur 1,
- Figur 4: ein erfindungsgemäßes Batteriesystem für den Einsatz in einem Kraftfahrzeug gemäß einem zweiten Ausführungsbeispiel in einer Querschnittsansicht gemäß einem Querschnitt entlang der Schnittachse I-I gemäß Figur 1,
- Figur 5: ein erfindungsgemäßes Batteriesystem für den Einsatz in einem Kraftfahrzeug gemäß einem dritten Ausführungsbeispiel in einer Querschnittsansicht gemäß einem Querschnitt entlang der Schnittachse I-I gemäß Figur 1,
- Figur 6: ein Kraftfahrzeug, umfassend ein erfindungsgemäßes Batteriesystem.

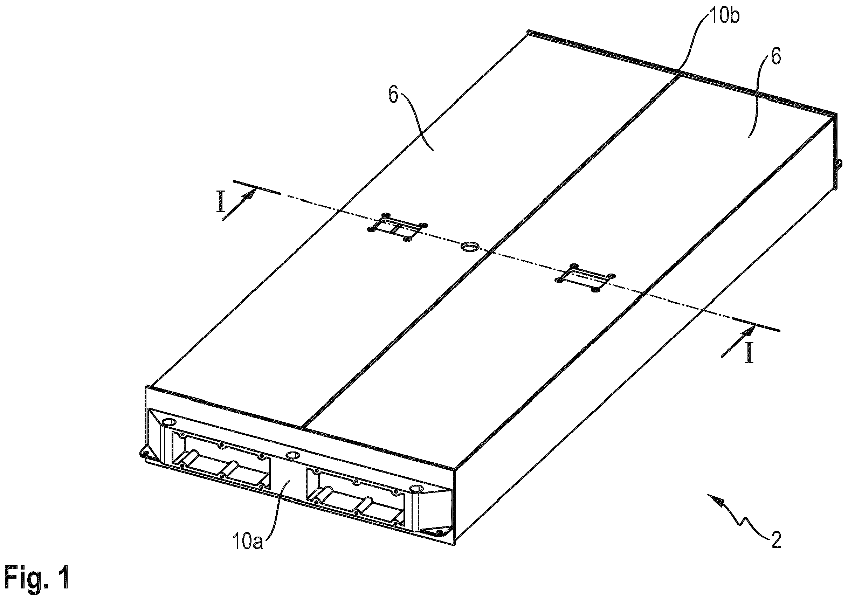

Figur 1 zeigt ein erfindungsgemäßes Batteriemodulgehäuse 2 zur Aufnahme zumindest eines Zellstacks 4 für den Einsatz in einem Kraftfahrzeug 80 gemäß einem ersten Ausführungsbeispiel in einer Draufsicht.

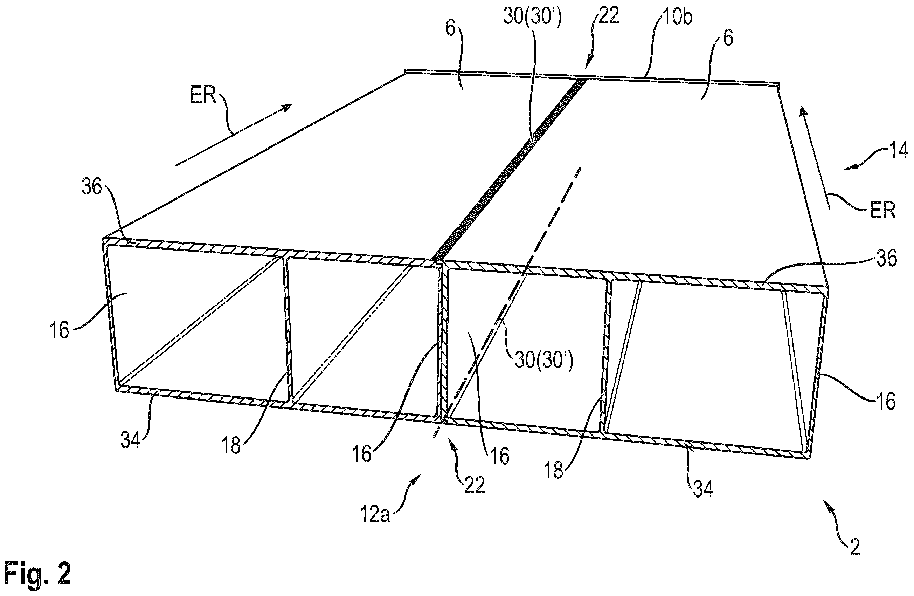

Figur 2 zeigt einen ein erfindungsgemäßes Batteriemodulgehäuse 2 zur Aufnahme zumindest eines Zellstacks 4 für den Einsatz in einem Kraftfahrzeug 80 gemäß einem ersten Ausführungsbeispiel in einer Draufsicht ohne Anordnung eines vorderen Abdeckelementes 10a.

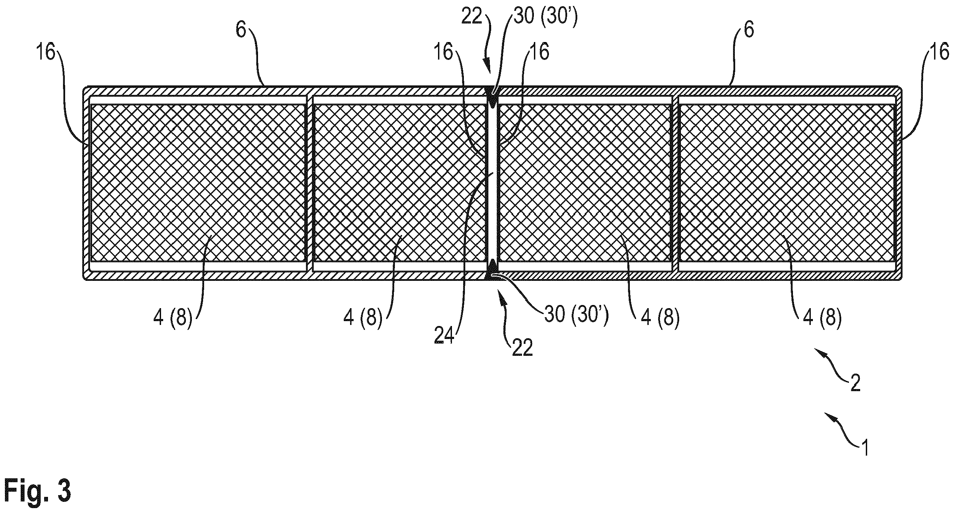

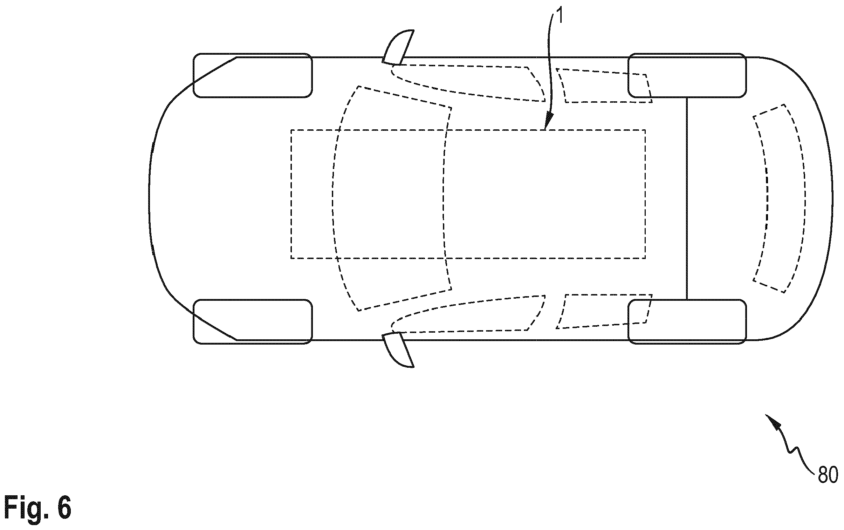

Wie gemäß den Figuren 1 und 2 erkennbar ist, umfasst das erfindungsgemäße Batteriemodulgehäuse 2 zur Aufnahme zumindest eines Zellstacks 4 (siehe Figur 3) für den Einsatz in einem Kraftfahrzeug 80 (siehe Figur 6), eine Mehrzahl von Gehäuseeinheiten 6 zur Aufnahme von Batteriezellen 8 (siehe Figur 3), ein vorderes und ein hinteres Abdeckelement 10a, 10b zum Verschließen der Gehäuseeinheiten 6, wobei die Gehäuseeinheiten 6 als Extrusionsprofile ausgebildet sind und eine vordere und eine hintere stirnseitig angeordnete Öffnung 12a, 12b zur Einführung der Batteriezellen 8 und eine zwischen den Öffnungen 12a, 12b angeordnete Gehäusewandung 14 aufweisen. Wie insbesondere aus Figur 2 zu erkennen ist, sind die Gehäuseeinheiten 6 vorliegend über ihre Gehäusewandung 14 in einem Fügebereich 22 stoffschlüssig miteinander verbunden. Das vordere und hintere Abdeckelement 10a, 10b ist ferner zum Abdecken der vorderen und hinteren stirnseitig angeordneten Öffnungen 12a, 12b der Gehäuseeinheiten 6 ausgebildet. Die stoffschlüssige Verbindung ist vorliegend in Form einer an den Verbindungsstellen 30 angeordneten Schweißverbindung 30' ausgebildet.

Wie in Figur 2 dargestellt ist, sind vorliegend zwei Gehäuseeinheiten 6 zur Aufnahme von Batteriezellen 8 vorgesehen, wobei die Gehäuseeinheiten 6 vorliegend über entlang einer Extrusionrichtung ER angeordnete Seitenwände 16 der jeweiligen Gehäusewandung 14 stoffschlüssig miteinander verbunden sind. Hierbei weist jede Gehäuseeinheit 6 zusätzlich eine Trennwand 18 auf, die die Gehäuseeinheit 6 in zwei Kammern trennt. Wie vorliegend erkennbar ist, weist die Gehäusewandung 14 jeder Gehäuseeinheit 6 eine längsseitig entlang der Extrusionrichtung ER angeordnete Boden- und Deckfläche 34, 36 auf, die über die senkrecht dazu angeordneten Seitenwände 16 miteinander verbunden sind.

Figur 3 zeigt ein erfindungsgemäßes Batteriesystem 1 für den Einsatz in einem Kraftfahrzeug 80 gemäß einem ersten Ausführungsbeispiel in einer Querschnittsansicht gemäß einem Querschnitt entlang der Schnittachse I-I gemäß Figur 1.

Wie gemäß Figur 3 zu erkennen ist, umfasst das Batteriesystem 1 ein Batteriemodulgehäuse 2 und eine Mehrzahl von innerhalb des Batteriemodulgehäuses 2 angeordneten Zellstacks 4 mit Batteriezellen 8 zum Antreiben des Kraftfahrzeugs 80.

Wie aus Figur 3 hervorgeht, ist zwischen zwei stoffschlüssig miteinander verbunden Gehäuseeinheiten 6 innerhalb eines Fügebereiches 22 eine Zwischenkammer 24 zur Aufnahme von Luft und/oder einer Brandschutzschicht vorgesehen, wobei die aneinander angrenzenden Seitenwände 16 der beiden Gehäuseeinheiten 6 vorliegend unmittelbar über eine Schweißverbindung 30' miteinander verbunden sind.

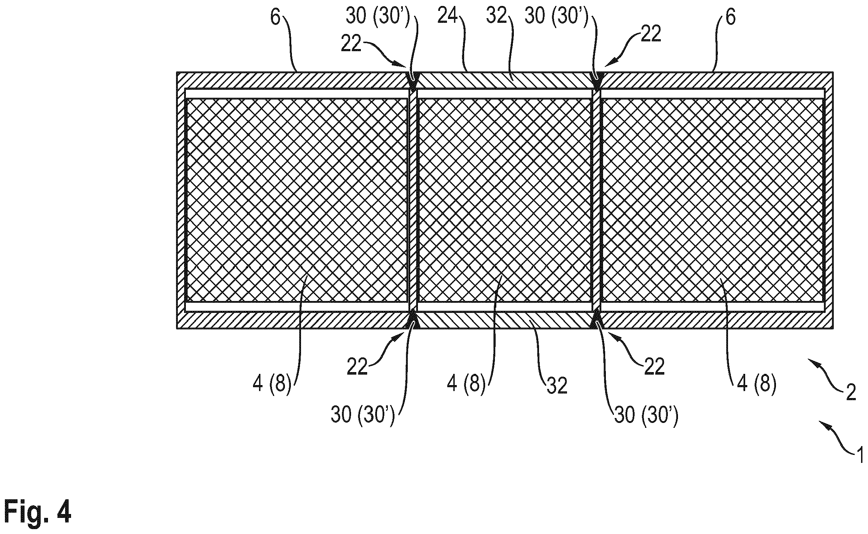

Figur 4 zeigt ein erfindungsgemäßes Batteriesystem 1 für den Einsatz in einem Kraftfahrzeug 80 gemäß einem zweiten Ausführungsbeispiel in einer Querschnittsansicht gemäß einem Querschnitt entlang der Schnittachse I-I gemäß Figur 1.

Wie gemäß Figur 4 erkennbar ist, umfasst das Batteriesystem 1 ein Batteriemodulgehäuse 2 und eine Mehrzahl von innerhalb des Batteriemodulgehäuses 2 angeordneten Zellstacks 4 mit Batteriezellen 8 zum Antreiben des Kraftfahrzeugs 80.

Wie aus Figur 4 hervorgeht, weist das Batteriesystem 1 gemäß Figur 4 drei Zellstacks 4 auf, wobei ein erstes Zellstack 4 innerhalb einer ersten Gehäuseeinheit 6, ein zweites Zellstack 4 innerhalb einer mit der ersten Gehäuseeinheit 6 stoffschlüssig verbundenen zweiten Gehäuseeinheit 6 und ein drittes Zellstack 4 zwischen der ersten und zweiten Gehäuseeinheit 2 in einer Zwischenkammer 24 angeordnet ist.

Zu erkennen ist hierbei ferner, dass die beiden Gehäuseeinheiten 6 mittelbar über zusätzliche Verbindungselemente 32 stoffschlüssig miteinander verbunden sind, wobei die zusätzlichen Verbindungselemente 32 in Fügebereichen 22 stoffschlüssig mit einer ersten und einer zweiten Gehäuseeinheit 6 verbunden sind, wobei die zusätzlichen Verbindungselemente 32 hierbei über eine erste Seite stoffschlüssig mit einer ersten Gehäuseeinheit 6 und über eine zweite Seite stoffschlüssig mit einer zweiten Gehäuseeinheit 6 verbunden sind. Die stoffschlüssige Verbindung ist vorliegend in Form einer an den Verbindungsstellen 30 angeordneten Schweißverbindung 30' ausgebildet.

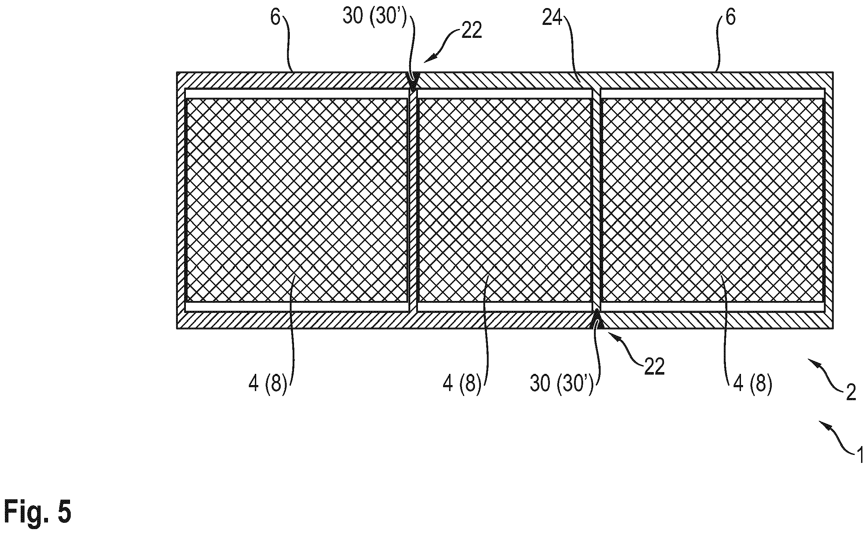

Figur 5 zeigt ein erfindungsgemäßes Batteriesystem 1 für den Einsatz in einem Kraftfahrzeug gemäß einem dritten Ausführungsbeispiel in einer Querschnittsansicht gemäß einem Querschnitt entlang der Schnittachse I-I gemäß Figur 1.

Wie gemäß Figur 5 zu erkennen ist, kann auch in einer Ausführungsform ohne zusätzliche Verbindungselemente 32 durch entsprechende Ausgestaltung der Boden- und Deckflächen 34, 36 der Gehäusewandung 14 der Gehäuseeinheiten 6 eine Zwischenkammer 24 zur Aufnahme zumindest eines Zellstacks 4 zur Verfügung gestellt werden.

Figur 6 zeigt ein Kraftfahrzeug, umfassend ein erfindungsgemäßes Batteriesystem 1. Das Kraftfahrzeug ist vorliegend in Form eines zumindest teilweise elektrisch betriebenen Kraftfahrzeugs ausgebildet. Vorzugsweise kann das gegenständliche Batteriesystem 1 dabei zwischen zwei Seitenschwellern in Querrichtung innerhalb des Kraftfahrzeugs 80 angeordnet sein und bspw. direkt, ohne zusätzlichen Batteriekasten oder dergleichen mit der Karosserie des Kraftfahrzeugs 80 verbunden, bspw. verschraubt sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Batteriemodulgehäuse (2) zur Aufnahme zumindest eines Zellstacks (4) für den Einsatz in einem Kraftfahrzeug (80), umfassend:
- eine Mehrzahl von Gehäuseeinheiten (6) zur Aufnahme von Batteriezellen (8),
- ein vorderes und ein hinteres Abdeckelement (10a, 10b) zum Verschließen der Gehäuseeinheiten (6),
- wobei die Gehäuseeinheiten (6) als Extrusionsprofile ausgebildet sind und eine vordere und eine hintere stirnseitig angeordnete Öffnung (12a, 12b) zur Einführung der Batteriezellen (8) und eine zwischen den Öffnungen (12a, 12b) angeordnete Gehäusewandung (14) aufweisen,
**dadurch gekennzeichnet, dass** die Gehäuseeinheiten (6) über ihre Gehäusewandung (14) stoffschlüssig miteinander verbunden sind und das vordere und hintere Abdeckelement (10a, 10b) zum Abdecken der vorderen und hinteren stirnseitig angeordneten Öffnungen (12a, 12b) der Gehäuseeinheiten (6) ausgebildet sind.

2. Batteriemodulgehäuse (2) nach Anspruch 1, **dadurch gekennzeichnet, dass** zumindest zwei Gehäuseeinheiten (6) zur Aufnahme von Batteriezellen (8) vorgesehen sind, wobei die Gehäuseeinheiten (6) vorzugsweise über entlang einer Extrusionrichtung (ER) angeordnete Seitenwände (16) der jeweiligen Gehäusewandung (14) stoffschlüssig miteinander verbunden sind, wobei jede Gehäuseeinheit (6) insbesondere eine Trennwand (18) aufweist, die die Gehäuseeinheit (6) in zwei Kammern trennt.

3. Batteriemodulgehäuse (2) nach Anspruch 1 oder 2, **dadurch gekennzeichnet, dass** zwischen zwei stoffschlüssig miteinander verbunden Gehäuseeinheiten (6) innerhalb eines Fügebereiches (22) eine Zwischenkammer (24) zur Aufnahme von Luft und/oder einer Brandschutzschicht vorgesehen ist, wobei die aneinander angrenzenden Seitenwände (16) der beiden Gehäuseeinheiten (6) vorzugsweise unmittelbar über eine Schweißverbindung (30') miteinander verbunden sind.

4. Batteriemodulgehäuse (2) nach einem der vorangehenden Ansprüche, **dadurch gekennzeichnet, dass** zwischen zwei stoffschlüssig miteinander verbunden Gehäuseeinheiten (6) innerhalb eines Fügebereiches (22) eine Zwischenkammer (24) zur Aufnahme von Batteriezellen (8) vorgesehen ist, wobei die aneinander angrenzenden Seitenwände (16) der beiden Gehäuseeinheiten (6) vorzugsweise mittelbar durch zusätzliche Verbindungselemente (32) stoffschlüssig miteinander verbunden sind.

5. Batteriemodulgehäuse (2) nach Anspruch 4, **dadurch gekennzeichnet, dass** die zusätzlichen Verbindungselemente (32) stoffschlüssig mit einer ersten und einer zweiten Gehäuseeinheit (6) verbunden sind, wobei die zusätzlichen Verbindungselemente (32) vorzugsweise über eine erste Seite stoffschlüssig mit einer ersten Gehäuseeinheit (6) und über eine zweite Seite stoffschlüssig mit einer zweiten Gehäuseeinheit (6) verbunden sind, wobei die zusätzlichen Verbindungselemente (32) insbesondere in Form von Blechen ausgebildet sind.

6. Batteriemodulgehäuse (2) nach einem der vorangehenden Ansprüche, **dadurch gekennzeichnet, dass** die stoffschlüssig miteinander verbundenen Gehäuseeinheiten (6) sowohl mechanisch, als auch mediendicht miteinander verbunden sind, wobei die stoffschlüssigen Verbindungsstellen (30), vorzugsweise an den Boden- und Deckflächen (34, 36) der Gehäuseeinheiten (6) zwischen zwei Gehäuseeinheiten (6) angeordnet sind.

7. Batteriemodulgehäuse (2) nach einem der vorangehenden Ansprüche, **dadurch gekennzeichnet, dass** die stoffschlüssige Verbindung in Form einer Klebeverbindung oder einer Schweißverbindung, insbesondere einer Rührreibschweißverbindung oder einer Laserschweißverbindung ausgebildet ist.

8. Batteriemodulgehäuse (2) nach einem der vorangehenden Ansprüche, **dadurch gekennzeichnet, dass** die Gehäuseeinheiten (6) aus einem Aluminiumwerkstoff und/oder einem Magnesiumwerkstoff und/oder einem faserverstärkten Kunststoff ausgebildet sind.

9. Batteriesystem (1) für den Einsatz in einem Kraftfahrzeug (80), umfassend ein Batteriemodulgehäuse (2) nach einem der vorangehenden Ansprüche und eine Mehrzahl von innerhalb des Batteriemodulgehäuses (2) angeordneten Zellstacks (4) zum Antreiben des Kraftfahrzeugs (80).

10. Batteriesystem (1) nach Anspruch 9, **dadurch gekennzeichnet, dass** zumindest drei Zellstacks (4) vorgesehen sind, wobei vorzugsweise ein erstes Zellstack (4) innerhalb einer ersten Gehäuseeinheit (6), ein zweites Zellstack (4) innerhalb einer mit der ersten Gehäuseeinheit (6) stoffschlüssig verbundenen zweiten Gehäuseeinheit (6) und ein drittes Zellstack (4) zwischen der ersten und zweiten Gehäuseeinheit (6) in einer Zwischenkammer (24) angeordnet ist.

11. Kraftfahrzeug (80), umfassend ein Batteriemodulgehäuse (2) nach einem der Ansprüche 1 bis 8, vorzugsweise umfassend ein Batteriesystem (1) nach einem der Ansprüche 9 oder 10.
